# EUROPEAN PATENT APPLICATION

(11) **EP 4 764 208 A1**
(43) Date of publication of application: **24.06.2026**
(21) Application number: 24222217.2
(22) Date of filing: 20.12.2024
(51) Int. Cl.: F03D 13/10, F03D 13/20, F03D 80/70, F03D 80/80

(54) **SUPPORT ASSEMBLY FOR A WIND TURBINE, WIND TURBINE AND METHOD OF ASSEMBLING A SUPPORT ASSEMBLY**

(71) Applicant: Nordex Energy SE & Co. KG, 22419 Hamburg (DE)
(72) Inventor: Muhamad, Ibrahim, 22419 Hamburg (DE)
(74) Representative: Epping - Hermann - Fischer

(57) **Abstract**

The present disclosure relates to a support assembly (200) for a wind turbine (100), comprising:
- a first support structure (202) configured for supporting at least a rotor assembly, in particular a rotor bearing arrangement (206) of the wind turbine, and
- a second support structure (204) which is configured to be rotatably mounted on top (103) of a tower (102) of the wind turbine (100), the tower (102) defining an axis (A-A), wherein the second support structure (204) is configured to support the first support structure, (202)
- wherein the second support structure (204) is configured to form a plurality of support interfaces (216) with the first support structure (202).

The present disclosure further relates to a wind turbine and method of assembling a support assembly.

## Description

The present disclosure relates to a support assembly for a wind turbine, a wind turbine and a method of assembling a support assembly with a rotor bearing arrangement.

Wind turbines are widely known from the prior art and are used to convert wind energy into electrical energy.

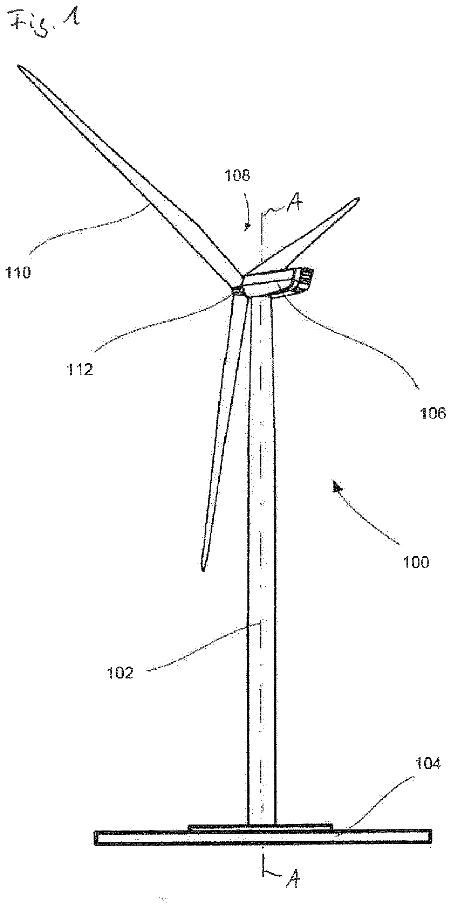

Figure 1 shows a schematic view of a wind turbine 100, which comprises a tower 102. The tower 102 is fixed to the ground by means of a foundation 104. A nacelle 106 is rotatably mounted at one end of the tower 102 opposite to the ground. The nacelle 106, for example, comprises a generator which is coupled to a rotor 108 via a rotor shaft (not shown). The rotor 108 comprises one or more (wind turbine) rotor blades 110, which are movably arranged on a rotor hub 112.

During operation, the rotor 108 is set in rotation by an airflow, for example wind interacting with the blades 110, resulting in forces acting on the blades 110. This rotational movement is transmitted to the generator via the transmission supporting the rotor shaft, with or without a gearbox. The generator converts the mechanical energy of the rotor 108 into electrical energy.

Electrical equipment, e.g., a generator, a transformer, a converter and so on, may be placed close to the tower 102 and inside the nacelle 106 to keep mechanical and electrical transmission losses low and to protect the equipment from environmental influences. The mounting of relatively heavy equipment at an elevated position, e.g., hub height requires a strong and relatively stiff mounting structure to be attached at the upper end of the tower 102. The mounting structure is also required to meet certain design requirements to allow easy movement of personnel, equipment, machines, tools, etc., without causing any hindrances.

As the size of wind turbines and their associated electrical equipment grows due to ever increasing demand for renewable energy, there is a continuous need for improved support structures of a wind turbine. Preferably, such support structures should be strong enough to carry heavy equipment, robust enough to withstand and transfer load to the tower, compact and modular enough to be transported by road during pre-assembly and/or to the installation site, as well as to enable safe and easy access inside the nacelle for service personnel, tools, machines, etc., once the support structure is attached to a tower.

According to a first aspect of the present disclosure, a support assembly for a wind turbine is disclosed.

The support assembly comprises a first support structure configured for supporting at least a rotor assembly, in particular a rotor bearing arrangement of the wind turbine, and a second support structure which is configured to be rotatably mounted on top of a tower of the wind turbine, the tower defining an axis, wherein the second support structure is configured to support the first support structure. The second support structure is configured to form a plurality of support interfaces with the first support structure.

By the construction of the support assembly with two parts, namely the first support structure and the second support structure, the total mass of the support assembly is split into two parts which allows a bigger support assembly to be built. The first support structure and the second support structure can be transported separately to the construction site, and also lifted separately (or combinedly as required) to the tower top. A further advantage is that the transport height, which is limited in each country, could be complied with the first support structure and also with the second support structure as they are transported separately.

Yet another advantage is that the first and the second support structures are manufactured separately which provides enhanced design freedom or flexibility, for example, in terms of selection of certain mechanical properties like stiffness at specific localized regions depending on the requirements.

The second support structure is configured to form a plurality of support interfaces with the first support structure. With the plurality of support interfaces, the second support structure can support the first support structure as well as other components, for example the support of a gearbox of a transmission assembly.

According to an embodiment, the plurality of support interfaces comprises at least a first interface defining a contour, wherein the contour is configured to extend at a predefined distance from the axis of the tower, and a second interface adjoining the first interface and configured to extend in a direction away from the axis of the tower, in particular beyond the predefined distance.

A contour may be formed or defined or characterized by loci of points with each point being located at the predefined distance from a reference, the reference in this case being the axis of the tower.

According to an embodiment, the predefined distance is fixed or uniform. For example, in case of a circular contour, the loci of points defining or constituting the circular contour are at same distance (radius) from the center.

By arranging the second interface in an adjacent manner to the first interface and extending away from the axis of the tower, it is possible to build the second interface as one-part configuration (or integrally) with the first interface. In other words, the first and the second support structures are assembled in such a manner that the first interface and the second interface may be formed characteristically integral. According to an embodiment, the second interface adjoins the first interface to define continuity.

In one example, if the first interface is defined by a circular contour, the second interface extending away from the axis of the tower may be apparent as a tangent with respect to the circular contour, or as a secant if hypothetically extended into the circular contour, or as an extension of a radial segment of the circular contour itself.

This configuration, particularly the configuration that renders or leads to the first and the second interfaces to be distinct from each other, is beneficial in terms of designing and constructing the first and the second support structures individually and distinctly.

One example of such criteria is the design criterion where certain properties, e.g., stiffness distribution can be adapted and customized. Another example is the geometrical criterion where bulkiness or compactness can be optimized and attained when the first and the second support structures are assembled. Yet another example is the choice of material where cost-effective materials may be selected for constructing either of the support structure. The examples are non-limiting.

Such a construction is stable enough such that the second interface can be used for supporting and transferring the forces or moments created by a certain component, e.g., a gearbox.

According to an embodiment, at least a portion of the first interface is arranged below the rotor assembly, in particular the rotor bearing arrangement, and a second interface is arranged below at least a portion of a transmission assembly coupled to the rotor assembly of the wind turbine.

This way, design adaptations and optimizations may be attained based on nature of loads, nature of contacts or interfaces taking part in transferring the loads, and so on.

According to a further embodiment, at least a part of the first support structure and the second support structure defines a closed wall region, and a support interface formed between the closed wall regions of the first and second support structures is characterized by at least one of a planar interface and a non-planar interface.

A planar interface is, for example, a horizontal interface formed between the flat, planar surfaces of first support structure and the second support structure when the first support structure is seated on the second support structure.

A non-planar interface, on the other hand, can be between inclined surfaces, or curved surfaces, or between a flat and a curved surface when the first support structure is supported by the second support structure.

According to an embodiment, a non-planar interface also covers a vertical, non-planar contact interface between the first support structure and the second support structure, which means for example that the first support structure is received within the second support structure with a vertical first interface. An example is an interface formed between two concentric cylinders of unequal diameters where the smaller one is received at least partly inside the bigger one to form a cylindrical (overlapping) contact between an outer periphery of the smaller cylinder and an inner periphery of the bigger cylinder.

Another example is a cylindrical part received inside an elliptical part or a square part, or vice versa, to form non-planar contact(s).

According to an embodiment, the first interface is a non-linear interface, in particular a curved (or arcuate) interface, and the second interface is a linear interface. As the first support structure and the second support structure define the closed wall region, e.g., a circular wall, it is preferable that this first interface is a non-linear interface with a curved form independent of whether the first interface is a horizontal, an inclined, or a vertical interface.

According to another embodiment, the first interface may be of any regular or irregular geometrical shape, or combinations thereof.

Further, the second interface can be formed on the same plane as the first interface or on a different plane as the first interface.

According to another embodiment, the second support structure comprises a base flange, and a wall extending upwardly from the base flange, wherein the wall comprises at least one access opening. This construction allows azimuth drives to be integrated in the base flange. The wall, e.g., a cylindrical wall extending upwardly from the base flange increases the stability of the second support structure, and the access opening in the wall allows access routes for service personnel, tools or equipment.

According to an embodiment, the first support structure may also be provided with an opening, e.g., an access opening.

According to an embodiment, the first support structure may be reinforced, e.g., by means of reinforcing means like stiffeners. In one example, one or more stiffeners may be provided in the interior of the first support structure and/or on the exterior of first support structure.

According to another embodiment, the first support structure comprises at least two support portions, each support portion configured to support a flange of a bearing housing of the rotor assembly, in particular the rotor bearing arrangement. The two support portions of the first support structure provide a stable and secure support to the rotor bearing arrangement.

The two support portions may provide symmetric support to the bearing arrangement resulting in a symmetric load distribution arising from the rotor bearing arrangement across the first support structure.

According to an embodiment, the first support structure supports the rotor assembly, in particular the rotor bearing arrangement at an angle inclined relative to at least one of the base flange, the first interface and the second interface. This inclined support of the rotor bearing arrangement allows the whole drive train to be supported at a tilted angle and not exactly horizontally.

According to a further embodiment, the first support structure comprises a first supporting section, the second support structure comprises a second supporting section, and the first supporting section and/or the second supporting section comprise an attaching interface for attaching a component carrying structure.

According to an exemplary embodiment, the portions (contacting surfaces) of the first supporting section and the second supporting section forming the second interface have non-aligning or non-conforming outer contours.

The first supporting section and the second supporting section are very stable sections of the first support structure and the second support structure. These first and second supporting sections have different functions. One function is to provide a very stable support for the transmission assembly (partly or wholly), e.g., the gearbox which is supported vertically above the first supporting section, and in-turn, on the second supporting section. Furthermore, the second supporting section comprises an attaching interface for attaching a component carrying structure, like the support frame of the nacelle.

According to an example, the first and the second supporting sections may facilitate mounting or attachment of other equipment, e.g., hoisting and lowering mechanisms, tools, etc.

According to an exemplary embodiment, the first and the second supporting sections may be reinforced, (e.g., stiffened) integrally or with an external reinforcing arrangement.

According to an embodiment, the at least two support portions and an upper portion of the first supporting section may be arranged along different planes.

According to another embodiment, each of the first and the second supporting sections comprises a plurality of connecting interfaces, e.g., for fastening, pin connection, etc.

According to a further embodiment, the first support structure comprises at least one mounting interface for mounting at least one of a tooling assembly, service kit and lifting equipment, in particular a crane.

For example, the tooling assembly may comprise an actuator (linear or rotary or a rotary-linear) which may facilitate fastening or unfastening between of the flange of the bearing housing with the support portions of the first support structure.

According to an example, the flange of the bearing housing and/or an adjacent portion of the support portion(s), e.g., the portion directly below the flange, may facilitate mounting or attachment of other equipment, e.g., hoisting and lowering mechanisms, tools, etc.

According to a second aspect, the disclosure relates to a wind turbine comprising a support assembly as described above and further comprising a rotor assembly having a rotor bearing arrangement. The rotor bearing arrangement having a bearing housing comprises a flange on both sides, and the support portion of the first support structure supports the bearing housing from a bottom side of the flange.

This construction enables a very stable and secure support of the bearing housing. Preferably, the flange extends between a first bearing receptacle, in particular a rotor side bearing receptacle, and a second bearing receptacle, in particular a transmission assembly side bearing receptacle of the rotor bearing arrangement. By this construction, the flange is constructed to be as large as possible, which increases the stability of the support for the bearing housing.

According to a further embodiment, the flange adjoins each of the first bearing receptacle and the second bearing receptacle through a transition portion and the transition portion is designed to extend beyond at least one support portion along a length direction of the bearing assembly.

This design allows the transition portion to be excluded from the connection or attachment, for example, when the flange is bolted to the at least two support portions of the first support structure.

Further, it is advantageous that one of a bottom side and a top side of the flange is configured to extend substantially colinearly with respect to a horizontal axis of the rotor bearing arrangement, in particular with respect to a horizontal axis of a shaft supported by the rotor bearing arrangement.

According to a third aspect of the disclosure, the disclosure relates to a method of assembling a support assembly as described above with the rotor assembly. The method comprises the following steps:
- attaching the first support structure to the second support structure such that the second support structure supports the first support structure, and
- attaching a lifting equipment, in particular a crane, to the first support structure.

According to an embodiment, the method comprises the following further steps:
- lifting a rotor bearing arrangement of the rotor assembly using the lifting equipment to a position above the first support structure, and
- placing the rotor bearing arrangement on the first support structure, and
- attaching the rotor bearing arrangement to the first support structure.

These three steps allow the rotor bearing arrangement to be installed using the lifting equipment on the first support structure.

According to a further embodiment, the method comprises:
- rotatably mounting the second support structure on top of a tower of the wind turbine, and
- lifting the first support structure to a position above the second support structure.

According to this embodiment, the second support structure is first mounted on top of a tower of the wind turbine and the first support structure is fixed to the support structure after this first step.

Further advantages, features and further developments are set out by the following exemplary embodiments, which are explained in conjunction with the attached figures. The same or similar elements or elements acting in the same way are provided with the same reference numerals in the following figures, even if they belong to different embodiments.
Figure 1 is a schematic view showing the main components of a wind turbine;
Figure 2 shows the side view of a support assembly supporting a rotor assembly, in particular a rotor bearing arrangement of the wind turbine;
Figure 3 shows Figure 2 depicting a sectional view of the rotor bearing arrangement;
Figure 4 shows a perspective view of the support assembly;
Figure 5 shows a perspective view of the first support structure;
Figure 6 shows a top view of the first support structure;
Figures 7 and 8 show first and second perspective views of the second support structure;
Figure 9 shows a front view of the first support structure attached with a lifting equipment of first kind, e.g., a crane;
Figure 10 shows a perspective view of the support assembly supporting the rotor bearing arrangement along with the lifting equipment of the first kind, e.g., a crane; and
Figure 11 shows a perspective view of the support assembly with a rotor bearing housing and a lifting equipment of second kind.

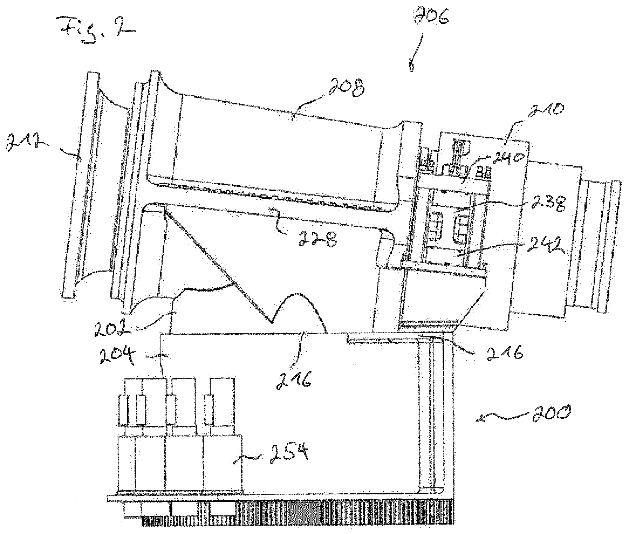

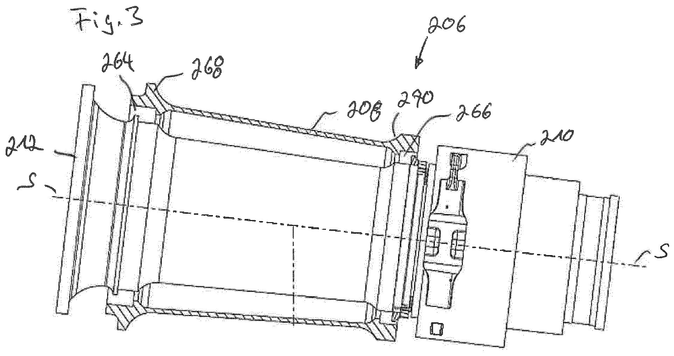

Figure 2 shows, in a side view, a support assembly 200 supporting a rotor assembly of a wind turbine 100. A rotor assembly of a wind turbine includes, among other subassemblies, a rotor 108 having a plurality of blades 110 connected to a hub 112, and a rotor shaft 212 (Figure 3) connected to the hub 112 and extending along a lengthwise direction of the nacelle 106. The rotor shaft 212 is rotatably supported by a rotor bearing arrangement 206 as shown. Thus, the rotor bearing arrangement 206 comprising a bearing housing 208 forms a part of the rotor assembly. In some contexts, references to rotor assembly in the disclosure may therefore be regarded as references to the rotor bearing arrangement.

The support assembly 200 comprises a first support structure 202 and a second support structure 204. The first support structure 202 supports the rotor assembly, in particular the rotor bearing arrangement 206. The rotor bearing arrangement comprises the bearing housing 208, supporting the rotor shaft 212 which is connected to the transmission assembly 210. After the transmission assembly 210 there is an output connection (not shown) that can be coupled to a generator (not shown) to generate power.

As shown, the first support structure 202 supports the rotor assembly, i.e., the bearing arrangement 206 having the bearing housing 208, as well as a part of the transmission assembly 210.

The second support structure 204 supporting the first support structure 202 is configured to be mounted on top 103 of a tower 102 of the wind turbine 100. The second support structure 204 is configured to form a plurality of support interfaces 216 with the first support structure 202.

A support interface according to some embodiments may be referenced or described as a common (or shared) boundary between two contacting bodies characterized by point contacts, line contacts, surface contacts, or combination of one or more of these contacts. For example, the first support structure seated on the second support structure may form a planar type support interface where two surfaces come in contact to form a common (or shared) interface area.

According to an embodiment, the plurality of support interfaces may be defined and distinguished from each other by means of type or nature of contacts forming the support interfaces, orientations of the contact portions forming the support interfaces, functional or operational features of the contact portions forming the support interfaces, geometries of contact portions forming the support interfaces, design of contact portions forming the support interfaces, nature of connection (e.g., fastening, welding, etc) at the support interfaces, and so on.

The second support structure 204 supports the first support structure 202 and is fixed by connection means (not shown in Figure 2) which are realized in this embodiment by a plurality of fasteners, e.g., screws.

According to an embodiment, the connections between the second support structure 204 and the first support structure 202 are realized at the plurality of support interfaces (216, 256, 258), which will be explained later.

Figure 3 shows Figure 2 depicting the rotor bearing arrangement 206 comprising the housing 208 in a sectional view taken along a longitudinal direction.

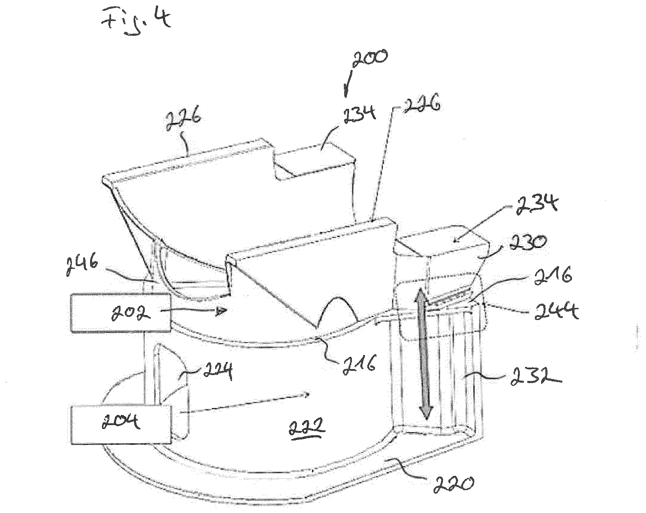

Figure 4 shows a perspective view of the support assembly 200 with the first support structure 202 mounted on the second support structure 204. The second support structure 204 comprises a base flange 220 and a wall 222 extending upwardly from the base flange 220. The wall 222 comprises an access opening 224 (shown partly) for service personnel/equipment to access the interior of the second support structure 204. The second support structure 204 comprises a plurality of support interfaces 216 with the first support structure 202. The first support structure 202 comprises at least two support portions 226. Each support portion 226 is configured to support a flange 228 (see Figure 2) of the bearing arrangement 206, particularly the housing 208 of the rotor bearing arrangement 206.

The first support structure 202 supports the rotor bearing arrangement 206 at an angle inclined relative to at least one of the base flange 220 or one of the plurality of the support interfaces 216.

Further, the first support structure 202 comprises a first supporting section 230 and the second support structure 204 comprises a second supporting section 232. The first supporting section 230 is arranged directly above the second supporting section 232 and on top of the first supporting section 232 a surface 234 for the support of the transmission assembly, e.g., a gearbox 210 is arranged or configured. As can be seen in Figure 2, the gearbox 210 comprises a gearbox support 236. The gearbox support 236 is realized by two arms 238 extending on opposite sides away from the gearbox 210. The arms 238 are held within a frame 240 and elastomeric elements 242 are arranged below and above the arms 238 within the frame 240. The power of the shaft 212 is transferred to the gearbox 210 and the gearbox support 236 absorbs the loads transferred by the gearbox. On one side, the arm 238 is pressed downwards and on the other side the arm 238 is pressed upwards and held by the frame 240.

As can be seen in Figure 4, the loads of the arm 238 (Figure 2) which is directed downwards (indicated by double headed arrow) is directly transmitted to the surface 234 of the first support structure 202 which is supported by the first supporting section 230, and further to the second supporting section 232 arranged directly below this surface 234.

The first supporting section 230 and the second supporting section 232 are connected together by connecting means 244 to achieve a very stiff and stable structure. The connecting means 244 could be, for example, a bolted connection or screws or rivets or pins, or any other means of connection.

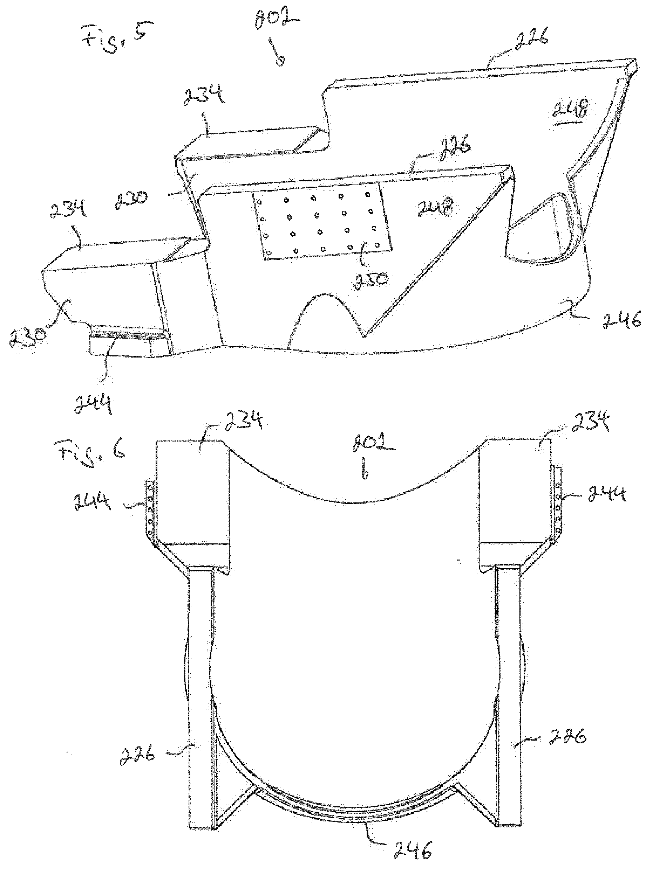

Figure 5 shows, in a perspective view, the first support structure 202. Figure 6 shows the first support structure 202 in a top view.

The first support structure 202 comprises a closed wall region 246, e.g., a circular wall which is located directly below the rotor bearing arrangement 206 and extending around the center of the tower 102. Extending away from the closed wall region 246 are the two first supporting sections 230. The closed wall region 246 has a bottom side that connects to the second support structure. On the opposite top side, the closed wall region 246 extends, e.g., in the form of flanges 248 or side walls eventually forming the support portion 226 on top of the flanges 248. The first support structure 202, in this embodiment the flange 248, comprises a mounting interface 250 for mounting at least one of a tooling assembly, a service kit or lifting equipment, in particular a crane. The mounting interface 250 can be arranged on one flange 248 or on both flanges 248.

If a non-planar interface, i.e. a vertical non-planar first interface is formed between the first and the second support structure 204, the connecting means 244 may be maneuvered horizontally instead of vertically as depicted in Figure 4.

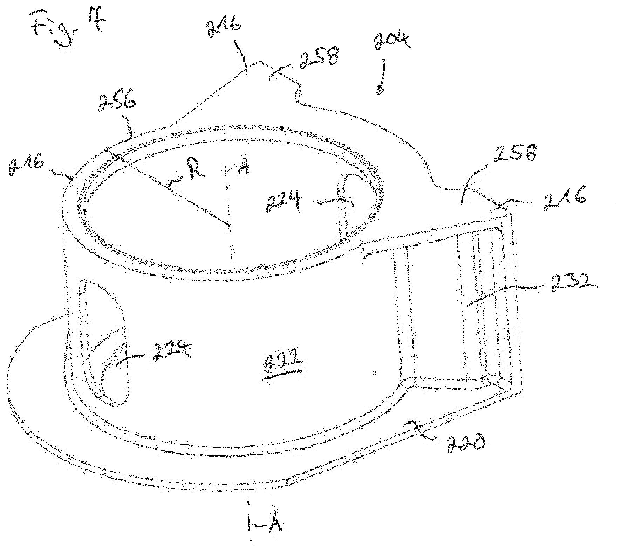

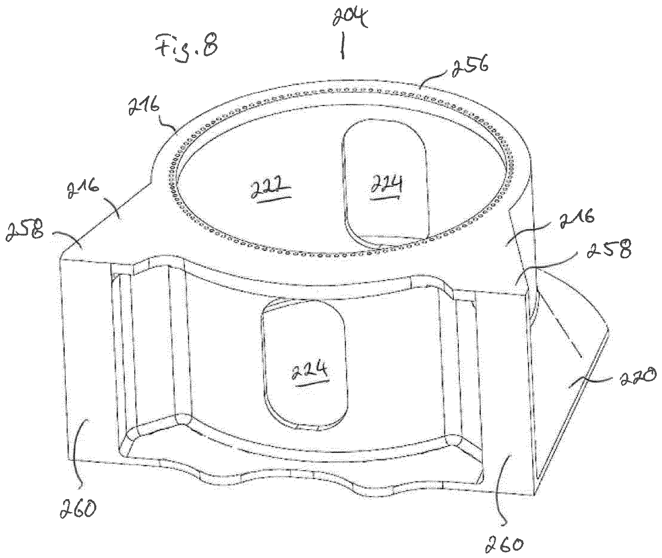

Figures 7 and 8 show the second support structure 204 in different perspective views. As described above, the second support structure 204 comprises the base flange 220 and the wall 222, e.g., a circular wall extending upwardly from the base flange 220. The wall 222 comprises two access openings 224 on opposite sides. The base flange comprises several openings for mounting an azimuth drive 254 (see Figure 2); also extending upwardly from the base flange 220 is the second support section 232.

On its top surface or on the outer periphery depending on the nature of connection, the second support structure 204 is configured to form the plurality of support interfaces 216 with the first support structure 202. As shown in Figure 4, the first support structure 202 is seated on the second support structure 204 to form the plurality of interfaces, for example, a plurality of planar interfaces at different sections where the first support structure is supported. The plurality of support interfaces 216 are characterized, for example, by at least one first interface 256, and a second interface 258, for example, directly above the second support section 232. The first interface 256 is for example the open surface above the closed wall, for example, the circular wall 222 as apparent in Figure 7. This first interface 256 is a planar interface and also a non-linear interface owing to circular definition.

According to other embodiments, the at least one first interface may be featured by a combination of planar and non-planar interfaces. For example, an upper surface of the second support structure on which a lower surface of the first support structure is supported may be defined as a stepped contour or as a stepped extension, e.g., in the radial direction or circumferential direction, such that the first interface formed between said upper surface of the second support structure and the lower surface of the first support structure may be formed as an interlocking or a snapping or a mating interface, instead of a regular surface contact type interface. Such an interlocking or a snapping or a mating interface may allow better connection between the two support structures and/or optimization of load distribution.

Further, as depicted in Figure 7, the first interface 256 is a curved interface as it goes around the top surface of the circular wall 222. In this embodiment the first interface 256 is arranged horizontally, which means perpendicular to the vertical axis of the tower 102. The first interface 256 can also be established as a non-planar interface, which means an inclined interface or an interface curved in the vertical direction or as a vertical interface.

The second interface 258, on the other hand, is at least a linear interface which means that it is arranged in a plane and has at least a portion of linear extent in comparison to the first interface. In this embodiment, the first interface 256 and the second interface 258 are arranged on the same plane but they can be embodied such that the second interface 258 is arranged or formed on a different plane in comparison to the first interface. The second interface 258 extends away from the tower axis A-A or the first interface 256, and in this embodiment, there are two second interfaces formed due to two distinct second support sections 232, but it is also possible that the second interface 258, extending away from the first interface 256, is realized as one second interface 258.

The extent of the second interface 258 may be tangential, radial or may be configured as a secant to curved extension of the first interface 256.

In an embodiment, two second interfaces resulting from the two second supporting sections 232 may be symmetrically arranged relative to the tower axis A-A and/or the rotor shaft axis S-S extending in the horizontal direction.

In another embodiment, the region where second interface is formed may have different structural or mechanical properties, e.g., stiffness, compressive strength, etc., in comparison to the first interface.

According to an embodiment, the first support structure 202 is such that the support portions 226 and the surface 234 for gearbox support are at different elevations and configured to extent along different planes.

The second interface 258 serves to support the first supporting section 230 of the first support structure 202 into which the loads from the transmission, e.g., the gearbox support 236 is transferred.

The second supporting section 232 comprises an attaching interface 260 for attaching a component carrying structure (see Figure 8). The component carrying structure can be, for example, the supporting frame of the nacelle.

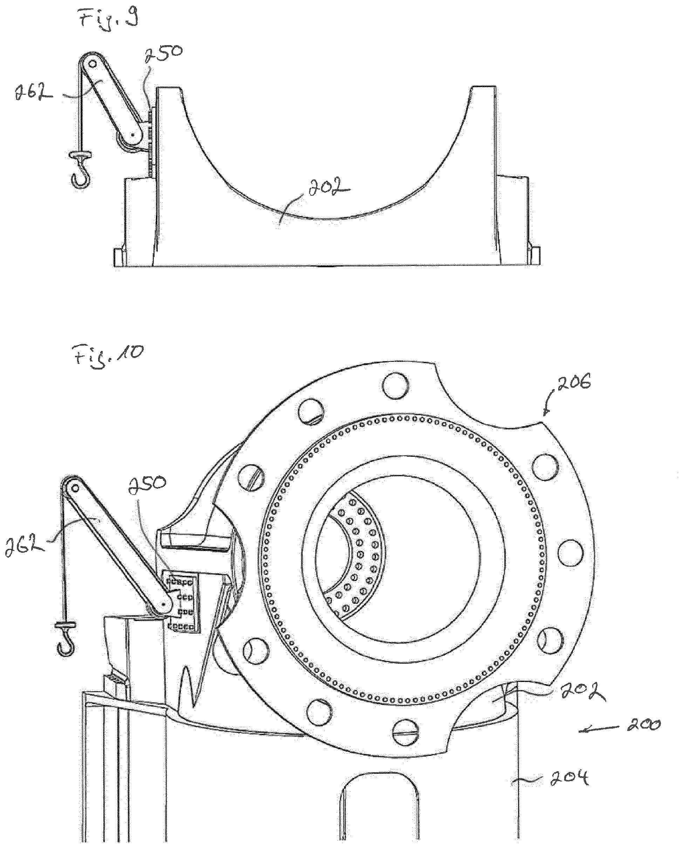

Figure 9 shows the first support structure 202 in a sideview with a crane 262 mounted on one side at the mounting interface 250. The crane 262 may facilitate lifting or lowering of components, e.g., yaw drives. The crane 262 may be installed or attached to the first support structure 202 at the manufacturing facility or on site. If attached at the manufacturing facility, the crane 262 may be employed to lift or lower various components, for example, tools. Further, when the first support structure 202 attached with the crane 262 is transported separately or alongside the second support structure 204, for example, on a ship, the crane 262 may be utilized for lifting and lowering operations on-board.

Figure 10 shows a perspective view of the support assembly 200 with the rotor bearing arrangement 206, wherein the first support structure 202 supports a crane 262 which is mounted to the mounting interface 250 (also shown in Figure 9).

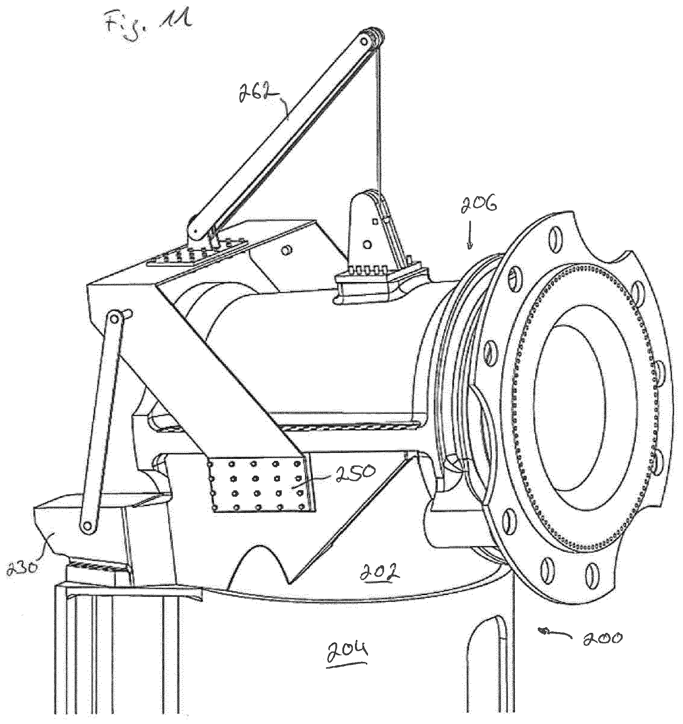

Figure 11 shows, in a perspective view the support assembly 200 and the rotor bearing arrangement 206, wherein a crane 262 is mounted to the first support structure 202 via a frame that extends across the bearing arrangement 206 and connected to the first support structure 202 on both sides at two mounting interfaces 250. The crane 262 is constructed to lift the whole rotor bearing arrangement 206 above the support assembly 200 in order to install the whole rotor bearing arrangement 206 on top of the tower 102. Once the rotor bearing arrangement 206 is installed in place above the support assembly, for example, on the wind turbine tower, the crane 262 may be used to lift other components, for example, components of the nacelle. The frame supporting the crane may be additionally supported by the first supporting section 230 of the first support structure 202 as shown.

Other forms or constructions of crane arrangement or lifting/lowering arrangements are possible in addition to the ones described with reference to Figures 7 to 9.

Now, the method of assembling the support assembly and the rotor assembly, in particular the rotor bearing arrangement is described in accordance with some embodiments of the present disclosure.

The method for mounting the support assembly and the rotor bearing arrangement 206 is typically as follows. The second support structure 204 is rotatably mounted on top of a tower 102 of the wind turbine 100. After that, the first support structure is lifted to a position above the second support structure 204. The first support structure is then attached to the second support structure by the connecting means 218. After that lifting equipment, in particular a crane 262, is attached to the first support structure. With the crane 262 as shown in Figure 11, the rotor bearing arrangement 206 is lifted above the first support structure and the rotor bearing arrangement is placed on the first support structure 202. Then the rotor bearing arrangement 206 is fixed to the first support structure 202.

As can be seen in Figures 2 and 3, the rotor bearing arrangement 206 has a bearing housing 208 which comprises a flange 228 on both sides. The support portion 226 of the first support structure 202 supports the bearing housing 208 from the bottom side of the flange 228.

The flange 228 extends between a first bearing receptacle 264, in particular a rotor side bearing receptacle, and a second bearing receptacle 266, in particular a gearbox side bearing receptacle of the bearing assembly. The flange 228 adjoins each of the first bearing receptacle 264 and the second bearing receptacle 266 through a transition portion 268 and 270. The transition portion 268 and 270 is designed to extend beyond at least one support portion along a length direction of the bearing assembly.

In Figure 2 the bearing receptacle is integral with the casting of the bearing housing 208, however, in an alternative embodiment it can be attached to the bearing housing using bolts, etc.

In one embodiment, the flange 228 is manufactured integrally with the cast part of the bearing housing 208 extending between the receptacles 264, 266 and terminating at the receptacles via a transition 268, 270 region.

As can be seen in Figures 2 and 3, the flange 228 is arranged exactly in the middle of the axis S-S of the shaft 212. In another embodiment, the bottom side or the topside of the flange 228 can be constructed to extend substantially colinearly with respect to the horizontal axis of the rotor bearing arrangement 206, in particular with respect to the horizontal axis of the shaft 212 inside the rotor bearing arrangement 206.

### List of reference signs

- 100: wind turbine
- 102: tower
- 104: foundation
- 106: nacelle
- 108: rotor
- 110: rotor blade
- 112: rotor hub
- 200: support assembly
- 202: first support structure
- 204: second support structure
- 206: rotor bearing arrangement
- 208: bearing housing
- 210: transmission assembly or gearbox
- 212: shaft

- 216: support interfaces
- 220: base flange
- 222: wall
- 224: access opening
- 226: support portion
- 228: flange of the bearing housing
- 230: first supporting section
- 232: second supporting section
- 234: surface for gearbox support
- 236: gearbox support
- 238: arm
- 240: frame
- 242: elastomeric elements
- 244: connecting means
- 246: circular wall region
- 248: flange of the first support structure
- 250: mounting interface
- 252: openings
- 254: azimuth drives
- 256: first interfaces
- 258: second interfaces
- 260: attaching interface
- 262: crane
- 264: first bearing receptacle
- 266: second bearing receptacle
- 268: transition portion
- 270: transition portion
- R: predefined distance
- A-A: tower axis
- S-S: Rotor shaft axis

## Claims

1. Support assembly (200) for a wind turbine (100), comprising:
- a first support structure (202) configured for supporting at least a rotor assembly, in particular a rotor bearing arrangement (206) of the wind turbine, and
- a second support structure (204) which is configured to be rotatably mounted on top (103) of a tower (102) of the wind turbine (100), the tower (102) defining an axis (A-A), wherein the second support structure (204) is configured to support the first support structure (202),
wherein the second support structure (204) is configured to form a plurality of support interfaces (216) with the first support structure (202).

2. Support assembly according to claim 1, wherein the plurality of support interfaces (216) comprises at least:
- a first interface (256) defining a contour, wherein the contour is configured to extend at a predefined distance (R) from the axis (A-A) of the tower (102), and
- a second interface (258) adjacent to the first interface (256) and configured to extend in a direction away from the axis (A-A) of the tower (102), in particular beyond the predefined distance (R) .

3. Support assembly according to claim 2, wherein:
- at least a portion of the first interface (256) is arranged below the rotor assembly, in particular the rotor bearing arrangement (206), and
- the second interface (258) is arranged below at least a portion of a transmission assembly (210) coupled to the rotor assembly.

4. Support assembly according to claim 1, wherein:
- at least a part of the first support structure (202) and the second support structure (204) defines a closed wall region (246), and
- a support interface (216) formed between the closed wall regions (246) of the first and the second support structures (202,204) is **characterized by** at least one of a planar interface and a non-planar interface.

5. Support assembly according to any one of the claims 1 to 4, wherein the second support structure (204) comprises a base flange (220), and a wall (222) extending upwardly from the base flange (220), and wherein the wall (222) comprises at least one access opening (224).

6. Support assembly according to any one of the preceding claims, wherein:
- the first support structure (202) comprises at least two support portions (226), each support portion (226) configured to support a flange (228) of a bearing housing (208) of the rotor assembly, in particular the rotor bearing arrangement (206).

7. Support assembly according to any one of the preceding claims, wherein the first support structure (202) supports the rotor assembly, in particular the rotor bearing arrangement (206), at an angle inclined relative to at least one of the base flange (220), the first interface (256), and the second interface (258).

8. Support assembly according to claim 1, wherein:
- the first support structure (202) comprises a first supporting section (230),
- the second support structure (204) comprises a second supporting section (232), and
- the first supporting section (230) and/or the second supporting section (232) comprises an attaching interface (260) for attaching a component carrying structure of the wind turbine.

9. Support assembly according to any of the preceding claims, wherein the first support structure (202) comprises at least one mounting interface (250) for mounting at least one of a tooling assembly, a service kit, and a lifting equipment, in particular a crane (260) .

10. Wind turbine comprising a support assembly (200) according at least one of the claims 1 to 9, further comprising a rotor assembly having a rotor bearing arrangement (206), wherein the rotor bearing arrangement (206) having a bearing housing (208) comprises a flange (228) on both sides, and the support portion (226) of the first support structure (202) is configured to support the bearing housing (208) from a bottom side of the flange (228).

11. Wind turbine according to claim 10, wherein the flange (228) extends between a first bearing receptacle (264), in particular a rotor side bearing receptacle, and a second bearing receptacle (266), in particular a transmission assembly side bearing receptacle of the rotor bearing arrangement (206).

12. Wind turbine according to claim 10 or 11, wherein the flange (228) adjoins each of the first bearing receptacle (264) and the second bearing receptacle (266) through a transition portion (268, 270), and the transition portion (268, 270) is designed to extend beyond at least one support portion (226) along a length direction of the rotor bearing arrangement (206) .

13. Wind turbine (100) according to claim 10, wherein one of a bottom side and a top side of the flange (228) is configured to extend substantially colinearly with respect to a horizontal axis (S-S) of the rotor bearing arrangement (206), in particular with respect to a horizontal axis (S-S) of a shaft (212) supported by the rotor bearing arrangement (206).

14. Method of assembling a support assembly (200) of any of the claims 1-9 with a rotor assembly of a wind turbine, comprising:
- attaching the first support structure (202) to the second support structure (204) such that the second support structure (204) supports the first support structure (202), and
- attaching a lifting equipment, in particular a crane (262) to the first support structure (202).

15. Method according to claim 14, comprising:
- lifting a rotor bearing arrangement (206) of the rotor assembly using the lifting equipment to a position above the first support structure (202), and placing the rotor bearing arrangement (206) on the first support structure (202), and
- attaching the rotor bearing arrangement (206) to the first support structure (202).
